# EUROPEAN PATENT APPLICATION

(11) **EP 4 656 299 A1**
(43) Date of publication of application: **03.12.2025**
(21) Application number: 23943361.8
(22) Date of filing: 30.11.2023
(51) Int. Cl.: B05C 5/02, H01M 4/04

(54) **COATING DIE HEAD, AND COATING DEVICE FOR ELECTRODE SHEET**

(30) Priority: 30.06.2023 CN 202321692795 U
(71) Applicant: Contemporary Amperex Technology Co., Limited, Ningde, Fujian 352100 (CN)
(72) Inventor: ZHAN, Bingyang, Ningde, Fujian 352100 (CN); ZHANG, Jingdong, Ningde, Fujian 352100 (CN); ZHANG, Lai, Ningde, Fujian 352100 (CN); WANG, Qiangjun, Ningde, Fujian 352100 (CN); CHEN, Weigang, Ningde, Fujian 352100 (CN); ZHEN, Zhihui, Ningde, Fujian 352100 (CN)
(74) Representative: Ziebig Hengelhaupt Intellectual Property Attorneys Patentanwaltskanzlei PartGmbB
(86) International application number: PCT/CN2023/135541
(87) International publication number: WO 2025/000885

(57) **Abstract**

Provided in the present application are a coating die head, and a coating device for an electrode sheet. The coating die head is provided with a feeding channel, a first flow homogenization cavity and a plurality of coating ports arranged at intervals in a first direction, wherein the first flow homogenization cavity extends in the first direction and is in communication with the feeding channel; the first flow homogenization cavity is in communication with the plurality of coating ports; two ends of the feeding channel are respectively a feeding port and a connecting port connected to the first flow homogenization cavity; and from the feeding port to the connecting port, the size of the cross section of the feeding channel in the first direction tends to increase. By means of the above arrangement, the pressure of slurry at the plurality of coating ports can be balanced, thus improving the discharge consistency of the plurality of coating ports and the uniformity of slurry coating.

## Description

### CROSS-REFERENCE TO RELATED APPLICATIONS

The present application claims priority to Chinese Patent Application No. 202321692795.8, filed on June 30, 2023 and entitled "COATING DIE HEAD, AND COATING DEVICE FOR ELECTRODE SHEET", which is incorporated herein by reference in its entirety.

### TECHNICAL FIELD

The present application relates to the technical field of battery production, and in particular to a coating die head and a coating device for an electrode sheet.

### BACKGROUND

Batteries possess advantages such as high specific energy and power density and are widely used in electronic devices, such as mobile phones, notebook computers, electric bicycles, electric vehicles, electric airplanes, electric ships, electric toy cars, electric toy ships, electric toy airplanes, electric tools, etc.

A coating process, as a crucial technological procedure in battery production, exerts significant influence on battery quality. How to improve uniformity of slurry coating in the coating process has always been important research conducted by a person of ordinary skill in the art.

### SUMMARY

In view of the above problems, provided in the present application are a coating die head and a coating device for an electrode sheet, and the coating die head can improve the uniformity of slurry coating in a coating process.

In a first aspect, provided in some embodiments of the present application are a coating die head provided with a feeding channel, a first flow homogenization cavity and a plurality of coating ports, the plurality of coating ports are arranged at intervals in a first direction and are in communication with the first flow homogenization cavity, two ends of the feeding channel are respectively provided with a feeding port and a connecting port, the connecting port is in communication with the first flow homogenization cavity, and from the feeding port to the connecting port, the size of the cross section of the feeding channel in the first direction tends to increase.

Since from the feeding port to the connecting port, the size of the cross section of the feeding channel in the first direction tends to increase, the flow distance of the slurry from the connecting port to the coating port away from the feeding channel can be reduced, thereby reducing pressure lost during the flow process, which is beneficial to increasing the pressure of the slurry at the coating port away from the feeding channel, so that the pressure of slurry at the plurality of coating ports is balanced, thus improving the discharge consistency of the plurality of coating ports and the uniformity of slurry coating.

According to the coating die head provided by some embodiments of the present application, the feeding channel is of a flared structure, and a large-diameter end of the flared structure is the feeding port, so that the size of the feeding channel in the first direction can be continuously increased in the extending direction from the feeding port to the connecting port.

According to the coating die head provided by some embodiments of the present application, the feeding channel includes a first portion and a second portion that are in communication with each other, the second portion communicates the first portion with the first flow homogenization cavity, the feeding port is provided at an end, away from the second portion, of the first portion, the connecting port is provided at an end, away from the first portion, of the second portion, and a cross-sectional area of the second portion is greater than that of the first portion; the shape of the cross section of the first portion perpendicular to the second direction is circular, the shape of the cross section of the second portion perpendicular to the second direction is elliptical, and a long axis of the ellipse is arranged in the first direction, so that the connecting port of the feeding channel continuously expands outward in the first direction.

According to the coating die head provided by some embodiments of the present application, the coating die head includes a first die head, a second die head and a bead, the first die head is provided with a first cavity and the feeding channel in communication with the first cavity, the second die head is connected to the bead and covers the first cavity, the bead is arranged at intervals from at least part of an inner wall of the first cavity, and a gap between the bead and the inner wall of the first cavity forms the first flow homogenization cavity.

According to the coating die head provided by some embodiments of the present application, the inner wall face of the first cavity is configured as an arc surface, and at least a part of the inner wall face of the feeding channel at the feeding port is tangent to the inner wall face of the first cavity, not only the pressure loss of the slurry flowing from the feeding channel into the first cavity is small, but also the pressure loss of the slurry is reduced when the slurry is flowing in the first cavity, which is beneficial to increasing the pressure of the slurry at each coating port.

According to the coating die head provided by some embodiments of the present application, the coating die head further includes a gasket provided with a plurality of notches at intervals in the first direction, the gasket is sandwiched between the first die head and the second die head, and the plurality of notches are all in communication with the first flow homogenization cavity to form the coating port.

According to the coating die head provided by some embodiments of the present application, the first die head is provided with a second cavity, the second die head covers the second cavity to form the second flow homogenization cavity, and the second flow homogenization cavity is in communication with the plurality of coating ports, and the second cavity can temporarily store the slurry flowing to the coating ports, which is beneficial to make the output of the slurry more uniform and stable.

According to the coating die head provided by some embodiments of the present application, the first flow homogenization cavity includes a material storage portion and a communication portion that are in communication with each other, the material storage portion, the communication portion and the bead all extend in the first direction, and the communication portion communicates the plurality of coating ports with the material storage portion.

According to the coating die head provided by some embodiments of the present application, the coating die head further includes a first adjusting rod and a second adjusting rod, the first adjusting rod is connected to the first die head, the second adjusting rod is connected to the second die head, and the first adjusting rod and the second adjusting rod are configured to adjust the size of openings of the coating ports.

According to the coating die head provided by some embodiments of the present application, the coating die head further includes a connecting member, the gasket is provided with a through hole, and the bead is fixed to the second die head by the connecting member extending through the through hole, and the connecting member can detachably connect the bead to the second die head, so that the bead is convenient to be detached.

According to the coating die head provided by some embodiments of the present application, the bead includes a first side face, a second side face and a third side face, the second side face is arranged at intervals from the third side face, the first side face is connected between the second side face and the third side face, the third side face is attached to an inner wall face of the first cavity, the communication portion is formed between the first side face and the inner wall face of the first cavity, and the material storage portion is formed between the second side face and the inner wall face of the first cavity.

According to the coating die head provided by some embodiments of the present application, the plurality of first adjusting rods are arranged at intervals in the first direction, and the plurality of second adjusting rods are arranged at intervals in the first direction, and an operator can individually adjust the opening degrees of the plurality of coating ports arranged at intervals in the first direction through the plurality of first adjusting rods and the plurality of second adjusting rods, so that the weight of the coating slurry coated on the coating ports can be flexibly adjusted.

According to the coating die head provided by some embodiments of the present application, the first side face is configured as an arc surface, and the first side face matches the inner wall face of the first cavity, so that the slurry flows smoothly in the first flow homogenization cavity, which is beneficial to reduce the resistance of the slurry when flowing.

In a second aspect, provided in some embodiments of the present application is a coating device for an electrode sheet which includes the coating die head provided by any one of the above technical solutions, and the coating die head is configured to coat a surface of the electrode sheet with a slurry.

The technical solutions provided by the embodiments of the present application bring at least the following beneficial effects:
provided in the present application are a coating die head, and the coating die head is provided with a feeding channel, a first flow homogenization cavity and a plurality of coating ports, where the first flow homogenization cavity extends in the first direction and is in communication with the feeding channel, the plurality of coating ports are arranged at intervals in a first direction, the first flow homogenization cavity is in communication with the plurality of coating ports, two ends of the feeding channel are respectively a feeding port and a connecting port connected to the first flow homogenization cavity; and from the feeding port to the connecting port, the size of the cross section of the feeding channel in the first direction tends to increase. Since from the feeding port to the connecting port, the size of the feeding channel in the first direction gradually increases, the flow distance of the slurry from the connecting port to the coating port away from the feeding channel can be reduced, thereby reducing pressure lost during the flow process, which is beneficial to increasing the pressure of the slurry at the coating port away from the feeding channel, so that the pressure of slurry at the plurality of coating ports is balanced, thus improving the discharge consistency of the plurality of coating ports and the uniformity of slurry coating.

The above description is merely an overview of the technical solutions of the present application. For a clearer understanding of the technical means of the present application, the present application can be carried out in accordance with the content of the description, and in order to make the above and other objectives, characteristics, and advantages of the present application apparent and comprehensible, specific embodiments of the present application are described below.

### DESCRIPTION OF DRAWINGS

Various other advantages and benefits will become clear to a person of ordinary skill in the art upon reading the detailed description of the preferable implementations below. The accompanying drawings are used only for the purpose of illustrating the preferred implementations and are not to be construed as limitations on the present application. Moreover, throughout the drawings, identical reference numerals are used to designate identical components. In the accompanying drawings:
FIG. 1 is a perspective view of a coating die head according to some embodiments of the present application;
FIG. 2 is a cross-sectional view at A in FIG. 1;
FIG. 3 is a cross-sectional view at a feeding channel of a coating die head according to some embodiments of the present application;
4 is a schematic structural diagram showing a first die head and a bead according to some embodiments of the present application;
FIG. 5 is a schematic structural diagram showing a first die head according to some embodiments of the present application;
FIG. 6 is a schematic structural diagram showing a portion of a coating die head according to some embodiments of the present application;
FIG. 7 is a schematic structural diagram showing a coating die head according to some embodiments of the present application; and
FIG. 8 is an enlarged view at B in FIG. 7.

Reference numerals in specific implementations are as follows:
11 first die head; 111 feeding channel; 1111 first portion; 11110 feeding port; 1112 second portion; 11120 connecting port; 112 first cavity; 1121 inner wall face; 1120 first flow homogenization cavity; 11201 material storage portion; 11202 communication portion; 113 second cavity; 11310 second flow homogenization cavity; 12 second die head; 13 bead; 131 first side face; 132 second side face; 133 third side face; 14 gasket; 141 notch; 142 through hole; 1410 coating port; 15 connecting member; 16 first adjusting rod; 17 second adjusting rod; first direction X; second direction Y; third direction Z.

### DESCRIPTION OF EMBODIMENTS

Embodiments of the technical solutions of the present application are described in detail below with reference to the drawings. The following embodiments are only used to more clearly illustrate the technical solutions of the present application, and thus are used as examples only, and are not intended to limit the protection range of the present application.

It should be noted that, unless otherwise specified, the technical terms or scientific terms used in the embodiments of the present application shall have the ordinary meanings as understood by a person of ordinary skill in the art to which the embodiments of the present application pertain.

In the description of the embodiments of the present application, orientations or positional relationships indicated by the technical terms such as "center", "longitudinal", "transverse", "length", "width", "thickness", "upper", "lower", "front", "rear", "left", "right", "vertical", "horizontal", "top", "bottom", "inner", "outer", "clockwise", "counter-clockwise", "axial", "radial", "circumferential", and the like are based on orientations or positional relationships shown in the drawings, and are merely for convenience of description of the embodiments of the present application and simplified description, and do not indicate or imply that an indicated apparatus or element must have a specific orientation or be configured and operated in a specific orientation, and thus should not be construed as limitations on the embodiments of the present application.

In addition, the technical terms "first", "second" and the like are only used for descriptive purposes, and should not be construed as indicating or implying relative importance or implicitly indicating the number of technical features indicated. In the description of the embodiments of the present application, "a plurality of" means two or more unless specifically defined otherwise.

In the description of the embodiments of the present application, unless explicitly specified and defined otherwise, the terms "mount", "couple", "connect", and "fasten" should be broadly understood, for example, they may be a fixed connection, a detachable connection, or an integral connection; or may be a mechanical connection, or an electrical connection; or may be a direct connection, or an indirect connection via an intermediate medium, or an internal communication between two elements or interaction between two elements. A person of ordinary skill in the art may understand the specific meanings of the above terms in the embodiments of the present application according to specific situations.

In the description of the embodiments of the present application, unless otherwise specified and limited, a first feature being "above" or "below" a second feature may be that the first feature is in direct contact with the second feature, or the first feature is in indirect contact with the second feature through an intermediate medium. Moreover, the first feature being "over", "above", or "on" the second feature may be that the first feature is directly above or diagonally above the second feature, or merely indicate that the first feature is horizontally higher than the second feature. The first feature being "below", "under", or "beneath" the second feature may be that the first feature is directly below or diagonally below the second feature, or merely indicate that the first feature is horizontally lower than the second feature.

At present, in view of the development of the market, the use of batteries is becoming increasingly more widespread. Batteries are used not only in energy storage power systems such as hydropower, thermal power, wind power, and solar power plants, but also in electric tools such as electric bicycles, electric motorcycles, and electric vehicles, as well as military equipment, aerospace, and many other fields.

Coating is an indispensable process in the production process of batteries, and the coating process has a very important influence on the quality of batteries, and directly affects various performance indicators such as safety, capacity and life of the batteries. Key process of Coating is a method for producing composite materials (films) by applying paste-like polymers, molten polymers, or polymer solutions onto paper, cloth, or plastic films. In the coating process of electrode sheets, a coating die head applies slurry onto the surface of the electrode sheets to impart excellent electrical properties to them.

At present, when coating the electrode sheets using a coating die head, to improve coating efficiency, the coating die head is typically provided with a plurality of coating ports to enable simultaneous coating at a plurality of locations on the electrode sheets. However, since the plurality of coating ports on the coating die head are positioned at different distances from the slurry feeding channel, the flow rate of slurry at the coating ports adjacent to the feeding channel is greater than that at the coating ports away from the feeding channel, due to the inertial effects of slurry flow from the feeding channel and pressure losses in the slurry at positions away from the feeding channel, as a result, the coating weight varies across different areas of the electrode sheet surface, reducing the consistency of the electrode sheets and adversely affecting their quality.

In order to improve the uniformity of slurry coating in the coating process, provided in an embodiment of the present application are a coating die head, and the coating die head is provided with a feeding channel, a first flow homogenization cavity and a plurality of coating ports, where the first flow homogenization cavity extends in the first direction and is in communication with the feeding channel, the plurality of coating ports are arranged at intervals in a first direction, the first flow homogenization cavity is in communication with the plurality of coating ports, two ends of the feeding channel are respectively a feeding port and a connecting port connected to the first flow homogenization cavity; and from the feeding port to the connecting port, the size of the feeding channel in the first direction gradually increases. Since from the feeding port to the connecting port, the size of the feeding channel in the first direction gradually increases, the flow distance of the slurry from the connecting port to the coating port away from the feeding channel can be reduced, thereby reducing pressure lost during the flow process, which is beneficial to increasing the pressure of the slurry at the coating port away from the feeding channel, so that the pressure of slurry at the plurality of coating ports is balanced, thus improving the discharge consistency of the plurality of coating ports and the uniformity of slurry coating.

The coating die head disclosed in the embodiments of the present application can be used for, but not limited to, coating electrode sheets, and can also be used for coating other films such as paper, cloth, or plastic films to obtain a composite material (film), thereby obtaining a composite material (film) having certain characteristics.

The technical solutions of the coating die head and the coating device for the electrode sheet provided by the specific embodiments of the present application are further described below.

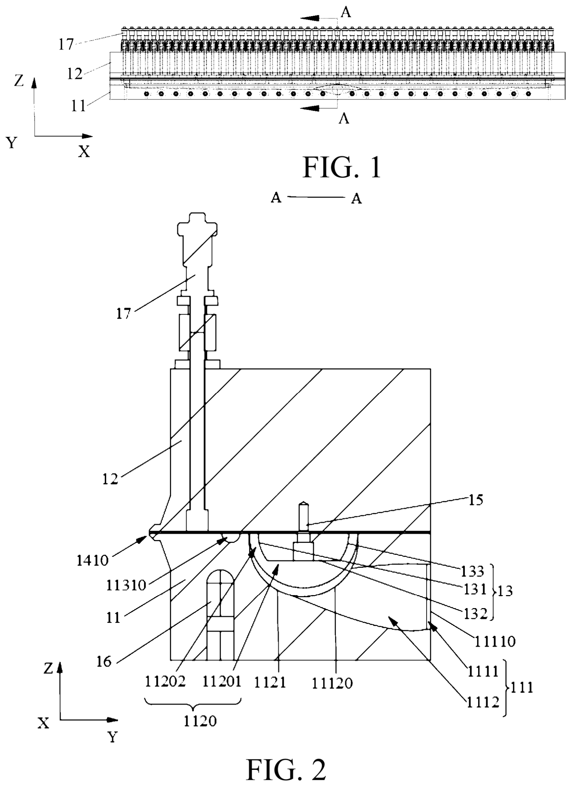

As shown in FIG. 1, provided in some embodiments of the present application is a coating die head, as shown in FIG. 2, where the coating die head is provided with a feeding channel 111, a first flow homogenization cavity 1120 and a plurality of coating ports 1410, the plurality of coating ports 1410 are arranged at intervals in a first direction X and are in communication with the first flow homogenization cavity 1120, two ends of the feeding channel 111 are respectively provided with a feeding port 11110 and a connecting port 11120, the connecting port 11120 is in communication with the first flow homogenization cavity 1120, and from the feeding port 11110 to the connecting port 11120, the size of the cross section of the feeding channel 111 in the first direction X tends to increase.

Exemplarily, the coating die head may be a component in a coating device that coats the slurry on the surface of the electrode sheet in the coating process, and after the slurry is passed into the coating die head, the slurry is synchronously coated on a plurality of portions of the electrode sheet under the action of the coating die head, so as to realize efficient coating on the electrode sheet.

The feeding channel 111 may be a slurry channel provided on the coating die head, the feeding channel 111 can be in communication with the outside, and the feeding channel 111 is used to allow the slurry to flow into the coating die head. The feeding port 11110 and the connecting port 11120 refer to ports at both ends of the feeding channel 111 in its extending direction, respectively, the feeding port 11110 may be a port through which the feeding channel 111 is in communication with the outside, and the slurry can be introduced into the feeding channel 11110 from the feeding port 111, the connecting port 11120 may be a port through which the feeding channel 111 is in communication with the first flow homogenization cavity 1120, and the slurry in the feeding channel 111 can flow into the first flow homogenization cavity 1120 from the connecting port 11120. Exemplarily, the communication between the connecting port 11120 and the first flow homogenization cavity 1120 may be that the connecting port 11120 is directly connected to the inner wall of the first flow homogenization cavity 1120, so that the feeding channel 111 is in communication with the first flow homogenization cavity 1120 through the connecting port 11120.

In the direction from the feeding port 11110 to the connecting port 11120, by setting the size of the cross section of the feeding channel 111 in the first direction X to tend to increase, the flow distance of the slurry flowing from the connecting port 11120 to the coating port 1410 away from the feeding channel 111 can be shortened, thereby reducing the pressure lost by the slurry during the flow process, which is beneficial to increasing the pressure of the slurry at the coating port 1410 away from the feeding channel 111, which is beneficial to balancing the pressure of the slurry at the plurality of coating ports 1410 at different distances from the feeding channel 111, thus improving the discharge consistency of the plurality of coating ports 1410.

The first flow homogenization cavity 1120 may be a cavity structure provided in the coating die head, and is provided to extend in the first direction X in the coating die head and is in communication with the connecting port 11120 of the feeding channel 111 and the plurality of coating ports 1410, so that the slurry flowing in from the feeding channel 111 can be distributed and temporarily stored in the coating die head in the first direction X, which facilitates subsequent flow to the plurality of coating ports 1410.

The coating port 1410 may be an opening structure provided on the coating die head, and is used for the outflow of the slurry, so that the slurry can be coated on the surface of the electrode sheet.

Exemplarily, the plurality of coating ports 1410 are provided, and the plurality of coating ports 1410 are arranged at intervals in the first direction X, so that the coating die head can simultaneously coat a plurality of portions of the electrode sheet in the first direction X, which is beneficial to improving the coating efficiency of the coating die head.

With the above structure, from the feeding port 11110 to the connecting port 11120, the size of the feeding channel 111 in the first direction X gradually increases, the flow distance of the slurry from the connecting port 11120 to the coating port 1410 away from the feeding channel 111 can be reduced, thereby reducing pressure loss of the slurry during the flow process, which is beneficial to increasing the pressure of the slurry at the coating port 1410 away from the feeding channel 111, so that the pressure of slurry at the plurality of coating ports 1410 is balanced, thus improving the discharge consistency of the plurality of coating ports 1410 and the uniformity of slurry coating.

In some embodiments, the feeding channel 111 is of a flared structure, a small-port end of the flared structure is the feeding port 11110, and a big-port end of the flared structure is configured as the connecting port 11120.

By setting the feeding channel 111 to be of a flared structure, and configuring the small-port end of the flared structure as the feeding port 11110 and configuring the big-port end of the flared structure as the connecting port 11120, the size of the provided feeding channel 111 in the first direction X in the extending direction from the feeding port 11110 to the connecting port 11120 can be continuously increased, so that the feeding channel 111 can meet the requirements to reduce the flow distance of the slurry flowing from the connecting port 11120 to the coating port 1410 away from the feeding channel 111.

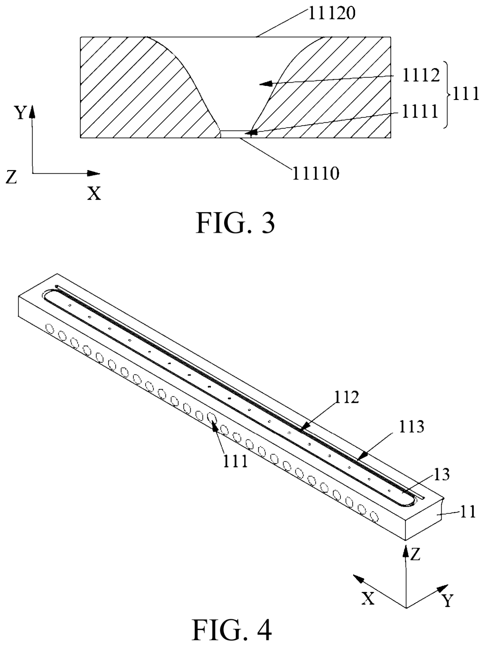

In some embodiments, as shown in FIG. 3, the feeding channel 111 includes a first portion 1111 and a second portion 1112 that are in communication with each other, the second portion 1112 communicates the first portion 1111 with the first flow homogenization cavity 1120, the feeding port 11110 is provided at an end, away from the second portion 1112, of the first portion 1111, the connecting port 11120 is provided at an end, away from the first portion 1111, of the second portion 1112, the shape of the cross section of the first portion 1111 perpendicular to the second direction Y is circular, the shape of the cross section of the second portion 1112 perpendicular to the second direction Y is elliptical, and a long axis of the ellipse is arranged in the first direction X, and the second direction Y is perpendicular to the first direction X.

The first portion 1111 and the second portion 1112 refer to different portions of the feeding channel 111, respectively, and are in communication with each other, and the slurry flows sequentially between the first portion 1111 and the second portion 1112 when flowing in the feeding channel 111. The second portion 1112 may be a portion of the feeding channel 111 in communication with the first flow homogenization cavity 1120, and the second portion is in communication between the first portion 1111 and the first flow homogenization cavity 1120, an end, away from the first portion 1111, of the second portion 1112 is provided with the connecting port 11120, and the second portion 1112 is in communication with the first flow homogenization cavity 1120 through the connecting port 11120. The first portion 1111 may be a portion of the feeding channel 111 that is in communication with the outside, and an end, away from the second portion 1112, of the first portion is provided with a feeding port 11110, and the slurry from the outside enters the feeding channel 111 through the feeding port 11110.

The shape of the cross section of the first portion 1111 perpendicular to the second direction Y being circular may refer to that the shape of the cross section of the first portion 1111 perpendicular to the second direction Y is circular, so that the resistance received by the slurry when flowing in the first portion 1111 is small. The shape of the cross section of the second portion 1112 perpendicular to the second direction Y being elliptical may refer to that the shape of the cross section of the second portion 1112 in the cross section perpendicular to the second direction Y is elliptical, which makes the inner wall face 1121 of the second portion 1112 be an arc-shaped surface, and the resistance received by the slurry when flowing in the second portion 1112 is small. A major axis of the ellipse is arranged in the first direction X, so that the size of the second portion 1112 in the first direction X is larger, so that the second portion 1112 can shorten the distance from the coating port 1410 away from the feeding channel 111 at the connecting port 11120 to reduce the flow distance of the slurry flowing from the connecting port 11120 to the coating port 1410 away from the feeding channel 111.

Exemplarily, the first portion 1111 may be provided as a cylindrical structure, the diameter of the cylindrical structure may range from 25 mm to 50 mm, and a length of the cylindrical structure may range from 2 mm to 15 mm. In some embodiments, the diameter of the first portion 1111 in the cylindrical structure may range from 30 mm to 45 mm, and the length of the cylindrical structure may range from 2 mm to 10 mm, for example, the diameter of the first portion 1111 in the cylindrical structure may range from 36 mm, and the length of the cylindrical structure may range from 5 mm.

In some embodiments, the inner wall face 1121 of the second portion 1112 is a gradually changing arc-shaped surface, a junction of the first portion 1111 and the second portion 1112 is a gradually changing starting position, the gradually changing second position and third position are arranged at intervals from the starting position, the starting position, the second position and the third position are continuously close to the first flow homogenization cavity 1120, and the shapes of the cross sections of the gradually changing second position and third position of the second portion 1112 perpendicular to the second direction Y are both set to be elliptical. The inner wall face 1121 of the second portion 1112 is formed by gradually changing the cross sections at the starting position, the second position and the third position in sequence.

Exemplarily, the distance of the second position from the starting position in the second direction Y ranges from 10 mm to 30 mm, an elliptical cross section of the second position perpendicular to the second direction Y has a major axis ranging from 20 mm to 40 mm and a minor axis being equal to the diameter of the first portion 1111. In some embodiments, the distance of the second position from the starting position in the second direction Y ranges from 15 mm to 25 mm, and the major axis of the elliptical cross section perpendicular to the second direction Y ranges from 25 mm to 35 mm, for example, the distance of the second position from the starting position in the second direction Y may be 20 mm, and the major axis of the elliptical cross section perpendicular to the second direction Y may be 30 mm.

The third position may be set at a central plane of the first flow homogenization cavity 1120, and the elliptical cross section of the third position perpendicular to the second direction Y has a major axis ranging from 60 mm to 160 mm and a minor axis ranging from 3 mm to 15 mm, where the edge of the elliptical cross section is flush with the inner wall face 1121 of the first flow homogenization cavity 1120. In some embodiments, the elliptical cross section of the third position perpendicular to the second direction Y may have a major axis ranging from 70 mm to 150 mm and a minor axis ranging from 3 mm to 10 mm, for example, the elliptical cross section of the third position perpendicular to the second direction Y has a major axis of 110 mm and a minor axis of 5 mm.

In some embodiments, the coating die head includes a first die head 11, a second die head 12 and a bead 13, the first die head 11 is provided with a first cavity 112 and the feeding channel 111 in communication with the first cavity 112, the second die head 12 is connected to the bead 13 and covers the first cavity 112, the bead 13 is arranged at intervals from at least a part of an inner wall of the first cavity 112, and a gap between the bead 13 and the inner wall of the first cavity 112 forms the first flow homogenization cavity 1120.

The first die head 11, the second die head 12 and the bead 13 may all be components in the coating die head, and they are connected to form the coating die head and can also form the first flow homogenization cavity 1120 and the like in the coating die head. The first cavity 112 may be a groove-shaped structure provided by the first die head 11 and extending in the first direction X to form the first flow homogenization cavity 1120, and the bead 13 may be a stripped member extending in the first direction X and connected to the second die head 12, and the second die head 12 covers the first cavity 112 and allows the bead 13 to extend into the first cavity 112. As shown in FIG. 4, the bead 13 is arranged at intervals from at least part of the inner wall of the first cavity 112, so that the first flow homogenization cavity 1120 extending in the first direction X is formed between the bead 13 and the inner wall of the first cavity 112.

In some embodiments, the inner wall face 1121 of the first cavity 112 is configured as an arc surface, and at least a part of the inner wall of the feeding channel 111 at the feeding port 11110 is tangent to the inner wall face 1121 of the first cavity 112.

By configuring the inner wall face 1121 of the first cavity 112 as an arc surface and making at least part of the inner wall of the feeding channel 111 at the feeding port 11110 be tangent to the inner wall face 1121 of the first cavity 112, not only the pressure loss of the slurry flowing from the feeding channel 111 into the first cavity 112 is small, but also the pressure loss of the slurry is reduced when the slurry is flowing in the first cavity 112, which is beneficial to increasing the pressure of the slurry at each coating port 1410.

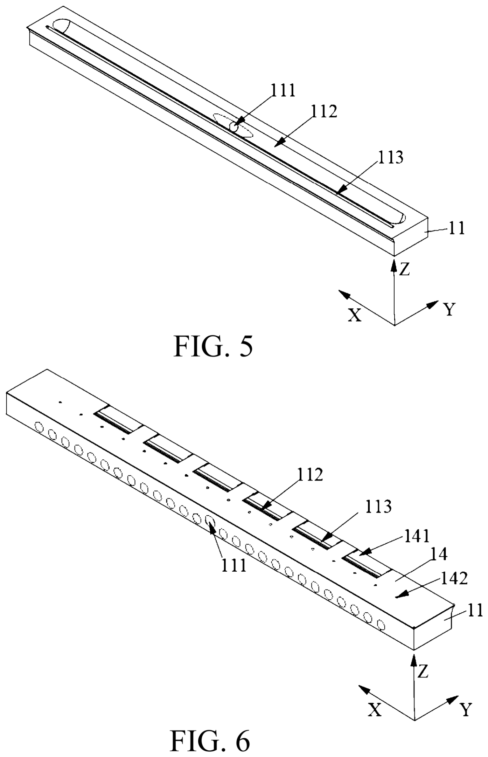

As shown in FIG. 5, the first cavity 112 is provided on a side face of the first die head 11 facing the second die head 12, the feeding channel 111 is provided on the first die head 11 and is in communication with the first cavity 112, the bead 13 is connected to a side face of the second die head 12 facing the first die head 11, the first die head 11 and the second die head 12 are buckled, the bead 13 connected to the second die head 12 is placed in the first cavity 112, a first flow homogenization cavity 1120 is formed between the bead 13 and an inner wall face 1121 of the first cavity 112 on the first die head 11, and the first flow homogenization cavity 1120 extending in the first direction X is in communication with the plurality of coating ports 1410 distributed in the first direction X.

In some embodiments, the first flow homogenization cavity 1120 includes a material storage portion 11201 and a communication portion 11202 that are in communication with each other, the material storage portion 11201, the communication portion 11202 and the bead 13 all extend in the first direction X, and the communication portion 11202 communicates the plurality of coating ports 1410 with the material storage portion 11201.

The material storage portion 11201 and the communication portion 11202 may be different portions in the first flow homogenization cavity 1120, and both are formed by the gap between the bead 13 and the inner wall face 1121 of the first cavity 112 on the first die head 11. The material storage portion 11201 may be a portion capable of temporarily storing the slurry, which can stabilize the slurry and facilitate the output of the slurry to be more uniform and stable, and the communication portion 11202 may be a portion capable of communicating the material storage portion 11201 with the coating ports 1410, so that the slurry in the material storage portion 11201 smoothly flows to each coating port 1410. By extending both the first cavity 112 and the bead 13 in the first direction X, the communication portion 11202 can communicate the plurality of coating ports 1410 arranged at intervals in the first direction X with the material storage portion 11201.

Exemplarily, on the cross section perpendicular to the first direction X, the cross-sectional area of the material storage portion 11201 is larger than the cross-sectional area of the communication portion 11202, so that the material storage portion 11201 can temporarily store enough slurry and can sufficiently stabilize the slurry, which is beneficial to make the output of the slurry relatively uniform and stable.

In some embodiments, the bead 13 includes a first side face 131, a second side face 132 and a third side face 133, the second side face 132 and the third side face 133 are arranged at intervals, the first side face 131 is connected between the second side face 132 and the third side face 133, the third side face 133 is attached to the inner wall face 1121 of the first cavity 112, a communication portion 11202 is formed between the first side face 131 and the inner wall face 1121 of the first cavity 112, and the material storage portion 11201 is formed between the second side face 132 and the inner wall face 1121 of the first cavity 112.

The first side face 131, the second side face 132 and the third side face 133 may be different surfaces on the outer side of the bead 13, and the first side face 131, the second side face 132 and the third side face 133 are all arranged at intervals from the inner wall of the first cavity 112. The second side face 132 and the third side face 133 may be two side faces provided opposite to each other and arranged at intervals from each other in the third direction Z perpendicular to the first direction X, and the third side face 133 being attached to the inner wall face 1121 of the first cavity 112 may mean that the third side face 133 is attached to the side face of the second die head 12, so that the bead 13 can be more stable when being connected to the second die head 12, and the gap between the second side face 132 and the inner wall face 1121 of the first cavity 112 forms the material storage portion 11201. The first side face 131 may be a side face of the bead 13 connected between the second side face 132 and the third side face 133, and a gap between the first side face 131 and the inner wall face 1121 of the first cavity 112 forms a communication portion 11202 communicating the coating port 1410 with the first flow homogenization cavity 1120.

In some embodiments, the first side face 131 is configured as an arc surface.

The first side face 131 being configured as the arc surface may refer to that the shape of the cross section of the first side face 131 perpendicular to the first direction X is an arc, so that the first side face 131 matches the inner wall face 1121 of the first cavity 112 in a semicircular shape, so that the slurry flows smoothly in the first flow homogenization cavity 1120, which is beneficial to reduce the resistance of the slurry when flowing.

In some embodiments, as shown in FIG. 6, the coating die head further includes a gasket 14 which is arranged with a plurality of notches 141 at intervals in the first direction X, the gasket 14 is sandwiched between the first die head 11 and the second die head 12, and the plurality of notches 141 are all in communication with the first flow homogenization cavity 1120 to form the coating port 1410.

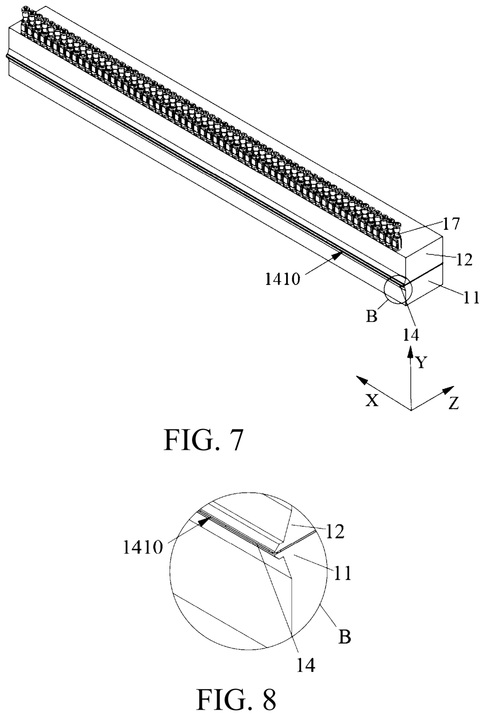

The gasket 14 may be a member for forming the plurality of coating ports 1410. The plurality of notches 141 are arranged at intervals on the gasket 14 in the first direction X, the notches 141 are provided through the gasket 14 in the thickness direction of the gasket 14 and are in communication with the edge of the gasket 14, as shown in FIGS. 7 and 8, by sandwiching the gasket 14 between the first die head 11 and the second die head 12 and communicating the notches 141 on the gasket 14 with the first flow homogenization cavity 1120, the gasket 14, the first die head 11 and the second die head 12 can form a plurality of coating ports 1410 in communication with the first flow homogenization cavity 1120 and the outside, so that the slurry in the first flow homogenization cavity 1120 can flow into the notches 141 to flow out to the outside for coating.

In some embodiments, the notches 141 on the gasket 14 may be manufactured synchronously with the gasket 14 by an integrated processing method such as casting, so that the gasket 14 with the notches 141 can be manufactured integrally and synchronously, which not only facilitates the processing and manufacturing of the gasket 14, but also makes the overall structure of the gasket 14 have good strength, and the notches 141 may also be manufactured by processing a whole blank of the gasket 14 by a machining method such as milling, so that the gasket 14 has low processing difficulty and processing cost.

In some embodiments, the coating die head further includes a connecting member 15, the gasket 14 is provided with a through hole 142, and the bead 13 is fixed to the second die head 12 by the connecting member 15 extending through the through hole 142.

The connecting member 15 may be a connecting member for connecting the bead 13 to the second die head 12. The through hole 142 provided on the gasket 14 may be a hole-shaped structure extending through the gasket 14 in the thickness direction of the gasket 14, and the fixing of the bead 13 to the second die head 12 by the connecting member 15 extending through the through hole 142 may mean that the bead 13 connected to the connecting member 15 extends through the through hole 142 and is connected to the second die head 12, so as to connect the connecting member 15 to the second die head 12.

Exemplarily, the connecting member 15 may be a connecting bolt, the bead 13 is provided with a countersunk hole, the side face of the second die head 12 facing the first die head 11 is provided with a threaded hole, the connecting bolt sequentially extends through the countersunk hole and the through hole 142 and is screwed into the threaded hole, the bead 13 is connected to the second die head 12, and a part of the gasket 14 is sandwiched between the bead 13 and the second die head 12.

In some embodiments, the first die head 11 is provided with a second cavity 113, the second die head 12 covers the second cavity 113 to form a second flow homogenization cavity 11310, and the second flow homogenization cavity 11310 is in communication with the plurality of coating ports 1410.

The second cavity 113 may be a groove-shaped structure provided by the first die head 11, and the second die head 12 covers the second cavity 113, so that the second cavity 113 forms a second flow homogenization cavity 11310 in communication with the plurality of coating ports 1410.

Exemplarily, the second cavity 113 extends in the first direction X, so that the second flow homogenization cavity 11310 formed by the second cavity 113 can communicate the plurality of coating ports 1410 arranged at intervals in the first direction X, and the second cavity 113 can temporarily store the slurry flowing to the coating ports 1410, which is beneficial to make the output of the slurry more uniform and stable.

Exemplarily, the second cavity 113 is provided on a side face of the first die head 11 facing the second die head 12, and in the second direction Y perpendicular to the first direction X, the second cavity 113 is provided in parallel with and arranged at intervals from the first cavity 112, and when the slurry flows into the coating port 1410 from the first flow homogenization cavity 1120, the slurry can flow into the second flow homogenization cavity 11310 formed by the second cavity 113.

In some embodiments, the coating die head further includes a first adjusting rod 16 and a second adjusting rod 17, the first adjusting rod 16 is connected to the first die head 11, the second adjusting rod 17 is connected to the second die head 12, and the first adjusting rod 16 and the second adjusting rod 17 are used to adjust the size of an opening of the coating port 1410.

The first adjusting rod 16 and the second adjusting rod 17 each refer to a rod-shaped member for adjusting the size of the opening of the coating port 1410 of the coating die head. The first adjusting rod 16 is connected to the first die head 11, the second adjusting rod 17 is connected to the second die head 12, and the operator can drive the first die head 11 to move through the first adjusting rod 16 to adjust the size of the opening of the coating port 1410, and can also drive the second die head 12 to move through the second adjusting rod 17 to adjust the size of the opening of the coating port 1410, so as to adjust the coating weight of the slurry by the coating die head.

In some embodiments, the plurality of first adjusting rods 16 are arranged at intervals in the first direction X, and the plurality of second adjusting rods 17 are arranged at intervals in the first direction X.

By providing the plurality of first adjusting rods 16 arranged at equal intervals in the first direction X on the first die head 11, the operator can individually adjust the opening degrees of the plurality of coating ports 1410 arranged at intervals in the first direction X through the plurality of first adjusting rods 16, so that the weight of the coating slurry coated on the coating ports 1410 can be flexibly adjusted. By providing the plurality of second adjusting rods 17 arranged at equal intervals in the first direction X on the second die head 12, the operator can individually adjust the opening degrees of the plurality of coating ports 1410 arranged at intervals in the first direction X through the plurality of second adjusting rods 17, so that the weight of the coating slurry coated on the coating ports 1410 can be flexibly adjusted.

In some embodiments, the coating die head includes a first die head 11, a second die head 12, a bead 13, a gasket 14, a first adjusting rod 16 and a second adjusting rod 17, the first die head 11 is provided with a feeding channel 111 and a first cavity 112 and a second cavity 113 extending in the first direction X, the feeding channel 111 is in communication with the first cavity 112, the first cavity 112 and the second cavity 113 are arranged at intervals, the gasket 14 is provided with a plurality of notches 141 arranged at intervals in the first direction X, the gasket 14 is sandwiched between the first die head 11 and the second die head 12, the notches 141 of the gasket 14 and the first die head 11 and the second die head 12 form a coating port 1410, the bead 13 is connected to the second die head 12 and placed in the first cavity 112, a communication portion 11202 is formed between a first side face 131 of the bead 13 and an inner wall face 1121 of the first cavity 112, a material storage portion 11201 is formed between a second side face 132 and the inner wall face 1121 of the first cavity 112, and the communication portion 11202 communicates the material storage portion 11201 with the plurality of coating ports 1410.

The feeding channel 111 is in communication with the material storage portion 11201 through the connecting port 11120 and is in communication with the outside through the feeding port 11110, the feeding channel 111 is configured to be of a flared structure, and from the feeding port 11110 to the connecting port 11120, the size of the feeding channel 111 in the first direction X gradually increases, the flow distance of the slurry from the connecting port 11120 to the coating port 1410 away from the feeding channel 111 can be reduced, thereby reducing pressure loss of the slurry during the flow process, which is beneficial to increasing the pressure of the slurry at the coating port 1410 away from the feeding channel 111, so that the pressure of slurry at the plurality of coating ports 1410 is balanced.

Provided in some embodiments of the present application is a coating device for an electrode sheet, where the coating device includes the coating die head provided by the above technical solutions, and the coating die head is configured to coat a surface of the electrode sheet with a slurry.

Finally, it should be noted that the above embodiments are only for the purpose of illustrating the technical solutions of the present application and are not to be construed as limiting the present application. Although the present application has been described in detail with reference to the above embodiments, it should be understood by a person of ordinary skill in the art that modifications may be made to the technical solutions described in the above embodiments, or equivalent replacement may be made to some or all of the technical features thereof. However, the modifications or replacements do not make the nature of corresponding technical solutions depart from the scope of the technical solutions of the embodiments of the present application, all of which shall fall within the scope of the claims and the description of the present application. In particular, the technical features mentioned in the embodiments may be combined in any manner provided that no structural conflict is present. The present application is not limited to the specific embodiments disclosed herein, but includes all technical solutions falling within the scope of the claims.

## Claims

1. A coating die head, comprising a feeding channel, a first flow homogenization cavity and a plurality of coating ports arranged at intervals in a first direction and in communication with the first flow homogenization cavity;
two ends of the feeding channel are respectively provided with a feeding port and a connecting port in communication with the first flow homogenization cavity, and from the feeding port to the connecting port, the size of the cross section of the feeding channel in the first direction tends to increase.

2. The coating die head according to claim 1, wherein the feeding channel comprises a first portion and a second portion that are in communication with each other, the second portion is configured to communicate the first portion with the first flow homogenization cavity, the feeding port is arranged at an end, away from the second portion, of the first portion, the connecting port is arranged at an end, away from the first portion, of the second portion, and a cross-sectional area of the second portion is greater than that of the first portion.

3. The coating die head according to claim 2, wherein the coating die head comprises a first die head, a second die head and a bead, the first die head is provided with a first cavity and the feeding channel in communication with the first cavity, the second die head is connected to the bead and covers the first cavity, the bead is arranged at intervals from at least part of an inner wall of the first cavity, and a gap between the bead and the inner wall of the first cavity forms the first flow homogenization cavity.

4. The coating die head according to claim 3, wherein an inner wall face of the first cavity is configured as an arc surface, and at least a part of the inner wall face of the feeding channel at the feeding port is tangent to the inner wall face of the first cavity.

5. The coating die head according to claim 4, wherein the coating die head further comprises a gasket provided with a plurality of notches at intervals in the first direction, the gasket is sandwiched between the first die head and the second die head, and the plurality of notches are all in communication with the first flow homogenization cavity to form the coating port.

6. The coating die head according to any one of claims 3 to 5, wherein the first die head is provided with a second cavity, the second die head covers the second cavity to form the second flow homogenization cavity, and the second flow homogenization cavity is in communication with the plurality of coating ports.

7. The coating die head according to any one of claims 3 to 6, wherein the first flow homogenization cavity comprises a material storage portion and a communication portion that are in communication with each other, the material storage portion, the communication portion and the bead all extend in the first direction, and the communication portion communicates the plurality of coating ports with the material storage portion.

8. The coating die head according to any one of claims 3 to 7, wherein the coating die head further comprises a first adjusting rod and a second adjusting rod, the first adjusting rod is connected to the first die head, the second adjusting rod is connected to the second die head, and the first adjusting rod and the second adjusting rod are configured to adjust the size of openings of the coating ports.

9. The coating die head according to claim 5, wherein the coating die head further comprises a connecting member, the gasket is provided with a through hole, and the bead is fixed to the second die head by the connecting member extending through the through hole.

10. The coating die head according to claim 7, wherein the bead comprises a first side face, a second side face and a third side face, the second side face is arranged at intervals from the third side face, the first side face is connected between the second side face and the third side face, the third side face is attached to an inner wall face of the first cavity, the communication portion is formed between the first side face and the inner wall face of the first cavity, and the material storage portion is formed between the second side face and the inner wall face of the first cavity.

11. The coating die head according to claim 8, wherein the plurality of first adjusting rods are arranged at intervals in the first direction, and the plurality of second adjusting rods are arranged at intervals in the first direction.

12. The coating die head according to claim 10, wherein the first side face is configured as the arc surface.

13. A coating device for an electrode sheet, comprising the coating die head according to any one of claims 1 to 12, wherein the coating die head is configured to coat a surface of the electrode sheet with a slurry.
